# EUROPEAN PATENT APPLICATION

(11) **EP 4 005 429 A1**
(43) Date of publication of application: **01.06.2022**
(21) Application number: 20844959.5
(22) Date of filing: 15.05.2020
(51) Int. Cl.: A45D 29/18, B08B 15/00

(54) **DEVICE FOR PURIFYING AIR IN THE WORKSPACE OF A NAIL ARTIST**

(30) Priority: 23.07.2019 RU 2019123243
(71) Applicant: Vladimirov, Pavel Gennadevich, Moscow, 129323 (RU)
(72) Inventor: Vladimirov, Pavel Gennadevich, Moscow, 129323 (RU)
(74) Representative: Hoefer & Partner Patentanwälte mbB
(86) International application number: PCT/RU2020/050097
(87) International publication number: WO 2021/015646

(57) **Abstract**

The invention relates to ventilation and machine building and can be used for cleaning air in local zone of nail service master. Technical result of the invention is to provide the possibility of reducing the impact of harmful factors and improving working conditions at the workplace of the nail service master and is achieved due to the fact that the device for cleaning the air in the working area of the nail service master contains: a housing, a fan, an air filter, a backlight line, light diffuser, multi-link hinge holder, clamp; the body is made collapsible from the lower and upper parts; holes are made below and above the body, covered with protective nets; a fan is mounted in the lower part of the case behind a protective mesh; an air filter is mounted above the fan, which is located in the upper part of the case; in the lower part of the housing, in a recess along the perimeter of the hole, a backlight line is mounted, which is covered with a light diffuser; the body is pivotally connected to a multi-link hinge holder, the links of which are movably interconnected; the holder is movably mounted on a clamp. 5 dependent claims, 2 drawings.

## Description

The invention relates to the field of ventilation and mechanical engineering and can be used to clean the air in the local area of the workplace of the nail service master [F24F7/007, F24F 13/20, B08B15 / 04].

In the work of a nail service master at his workplace, there are such harmful and dangerous factors as dust, volatile harmful substances in the air of the working area (acetone, varnish), chemical factors (chlorine, ozone, synthetic detergents), insufficient illumination of the workplace and eye strain. In addition, the peculiarity of the workplace of the nail service master is due to its small area and placement in the aisles of large shopping centres, shops, office buildings, which makes it difficult to provide air ventilation with ventilation systems equipped in buildings. To reduce the impact of harmful factors, they must be completely or partially neutralized. This can be achieved by using personal respiratory protection equipment and placing additional lighting in the workplace. However, the use of individual respiratory equipment brings certain inconveniences in the work of the master and does not provide protection for the client of the master, therefore, a technical solution to this problem is required.

From the prior art, an AIR CLEANER is known [TW201831844 (A), Publ.: 09/01/2018], comprising a housing with openings for air supply and discharge and an air flow channel made between the air supply and air discharge openings, a blower mounted on the housing with the ability to move air from the air supply hole to the air exhaust hole, electric dust collector, HEPA Filter and blower operation control unit.

The disadvantage of the analogue is the low performance due to the stationary design of the air purification device, which significantly complicates the deployment of such a device at the workplace of the nail service master.

Also, from the prior art is known a PORTABLE AIR PURUFIER AND CONTROL METHOD THEREOF AND AIR PURIFYING SYSTEM [CN105757818 (A), Publ .. 07/13/2016], containing a housing with at least one air outlet and at least one air inlet, a portable air purifier power supply, a detecting module, a control module, a communication module and a central control unit, a filter and a fan are sequentially arranged in the housing along the air flowing path, the central control unit receives the filter usage condition from the detecting module, transmits the use condition through the communication module, and receives an external command transmitted by the communication module, controls the fan to be started and stopped, and / or controls the fan speed through the control module according to a preset program.

The disadvantage of the analogue is the low efficiency of air purification due to the large size of the device and the inability to change the angle of inclination of the air inlet relative to the surface.

Also known from the prior art is a SMOG DUST EXTRACTION [CN204816121 (U), publ .: 02.12.2015], which includes a housing containing an activated carbon filter, a movable holder, a suction hood, a high-temperature dust-collecting hose, an electric cabinet, a fan, an air outlet and ash bucket.

The disadvantage of this analogue is low performance, due to the large weight and size characteristics of the device, which complicates its placement directly at the workplace of the nail service master, as well as the complexity of servicing the device associated with its design features.

The closest prior art is APPARATUS AND METHOD FOR VACUUMING PARTICLES OR FUMES FROM FINGER NAIL TREATMENTS [US 20070238404 A1, ony6n. 11.10.2007 r.], including an air diffuser, a filter, a cover, a fan, and a shade in which the fan is located. The air diffuser may be surrounded by the filter except for a bottom opening in the air diffuser. The cover surrounds the filter and the air diffuser except for a bottom opening in the filter and the bottom opening in the air diffuser. The air diffuser and the cover are attached to the shade. The shade has a bottom opening. The fan causes air to flow into the shade through the bottom opening of the shade, then through the bottom opening of the air diffuser, the filter, and a first opening of the cover, then out a set of a plurality of openings in a side of the air diffuser, then through the filter, and then out a set of a plurality of openings in the cover.

The main technical problem of the closest prior art is the location of the point light in such a way that the sucked in by the fan is, together with the dust, passes through the point light source to illuminate it, which causes significant disadvantages. First, the dust that forms during manicure procedures passes through the light source and, thus, darkens the illuminated surface of the fingernails. Secondly, a point light source is located behind a protective grill, which significantly limits the angle of the beam that hits the illuminated surface, while, due to the convex nature of the illuminated surface of the nail, the light from the lamp in the known technical solution forms shadows that interfere with the work of the manicurist. These features of the known technical solution increase the impact of harmful factors and the deterioration of working conditions at the workplace of the nail service master.

The object of the invention is to avoid disadvantages of the closest prior art.

The technical result of the invention is to ensure the possibility of reducing the impact of harmful factors and improving working conditions at the workplace of the nail service master.

The specified technical result is achieved due to the fact that the device for cleaning the air in the working area of the master of the nail service, containing: the body; fan; air filter; backlight line; light diffuser; multi-link hinge holder; clamp; the body is made collapsible from the lower and upper parts; holes are made below and above the body, covered with protective nets; a fan is mounted in the lower part of the case behind a protective mesh; an air filter is mounted above the fan, which is located in the upper part of the case; in the lower part of the housing, in a recess along the perimeter of the hole, a backlight line is mounted, which is covered with a light diffuser; the body is pivotally connected to a multi-link hinge holder, the links of which are movably interconnected; the holder is movably mounted on a clamp.

In particular, the fan and the backlight are connected to the control unit.

In particular, the fan is axial.

In particular, the air filter is cylindrical in shape.

In particular, the air filter is filled with activated carbon or cellulose or cellulose paper or paper or non-woven material.

In particular, the holder links are made of paired parallel profile guides.

### BRIEF DESCRIPTION OF DRAWINGS

Figure 1 shows a general view of the device for air purification in the working area of the nail service master.
Figure 2 shows a sectional view of the air purifier.
The figures indicate: 1 - air purifier, 2 - guides, 3 - connecting plates, 4 - retainer, 5 - clamp, 6 - hinge holder, 7 - lower part of the case, 8 - upper part of the case, 9 - fan, 10 - holder filter, 11 - air filter, 12 - backlight line, 13 - diffuser, 14 - decorative nets, 15 - hinge ball, 16 - cylindrical protrusion, 17 - groove, 18 - pressure plate, 19 - screws, 20 - support element.

### DETAILED DESCRIPTION

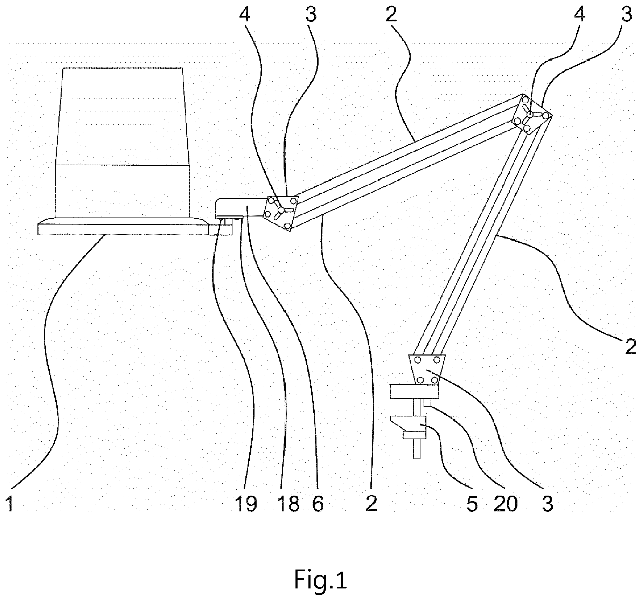

The device for air purification in the working area of the nail service master contains an air purifier 1 (see Fig. 1) movably mounted on a multi-link hinge holder containing several pairs of profile guides 2 mounted movably with a detachable connection between paired connecting plates 3.

Between one of the paired connecting plates 3 of the holder, hinge holder 6 with a spherical recess is mounted (not shown in the figures). At the other end of the holder, between the paired connecting plates 3, a supporting element 20 is mounted, made in the form of a cylindrical rod.

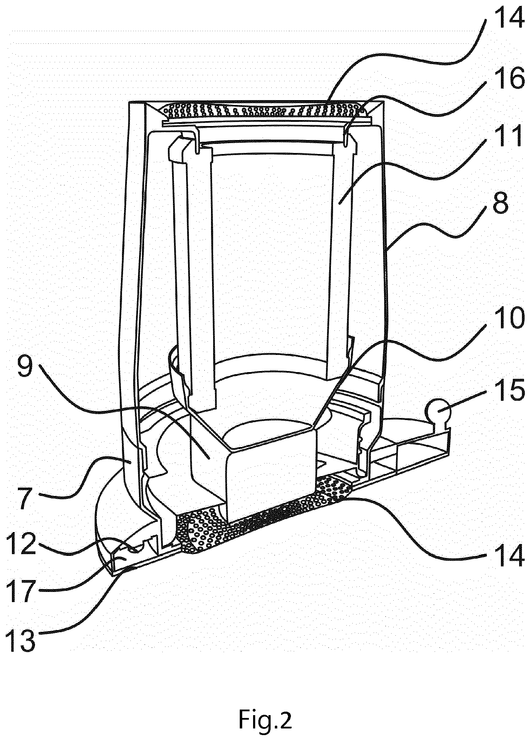

The air purifier 1 contains the lower 7 and upper 8 parts of the body (see Fig. 2) of cylindrical shape, interconnected by detachable, for example, threaded connection. In the lower 7 and upper 8 parts of the air purifier 1 there are holes for supplying and discharging air, respectively (not shown in the figures). A fan 9 is mounted in the lower part of the housing 7, while the fan 9 is designed as an axial one. On the upper part of the fan 9, the holder 10 bears a cylindrical air filter 11. From above, the air filter 11 with its inner part rests on a cylindrical protrusion 16, made along the perimeter of the air outlet in the upper part of the housing 8.

Outside the lower part of the housing 7 of the air purifier 1, along the perimeter of the air supply hole, a groove 17 is made in the upper wall of which a backlight line 12 is mounted, made, for example, in the form of a backlight line. Outside, the groove 17 is closed by a diffuser 13.

The hinge ball 15 is mounted from the end of the lower part of the housing 7.

The air inlet and outlet openings are covered with decorative nets 14.

The backlight line 12 and the fan unit 9 are connected to a control unit (not shown in the figures).

The device for purifying the air in the working area of the nail service master is used as follows.

Before starting to use, the device is mounted in the immediate vicinity of the working area in which the air is supposed to be cleaned. For this, the clamp 5 is mounted on the edge of the working table of the master of the nail service or other stationary protruding part. The support element 20 of the holder is aligned with the hole made in the upper part of the clamp 5. The ball of the hinge 15 of the air purifier 1 is aligned with the spherical recess in the hinge support 6 of the holder, the ball of the hinge 15 is pressed with the pressure plate 18 and fixed with screws 19.

To install the air purifier 1 in the horizontal plane, the air purifier 1 is held with one or both hands and the support element 20 of the holder and the holes of the clamp 5 are moved along the vertical axis.

To install the air purifier 1 in the vertical plane, the air purifier 1 is moved up and down, changing the angles of inclination of the paired guides 2 of each of the links of the holder relative to the connecting plates 3. After choosing the position of the air purifier 1 in the vertical plane, fix its position by tightening the retainer 4.

To set the angle of inclination of the air purifier 1 relative to the horizontal plane, change the position of the ball of the hinge 15 of the air purifier 1 in the spherical hole of the hinge support 6 of the holder.

The device is turned on and the rotation speed of the fan 9 is set on the control unit, the backlight line 12 is turned on, the light from which is distributed through the diffuser 13 over the surface of the working area. The fan 9 blows the air to be cleaned through the air supply hole in the lower part of the housing 7 to the area located on the outer side of the air filter 11 in the upper part of the housing 8, passes through the air filter 11 and discharges through the air outlet made from the top in the upper part of the housing 8 air purified from fine dust, particles and gas molecules to the outside.

In this case, decorative nets 14 made in the lower and upper parts of the air purifier 1 provide protection of the fan 9 from the ingress of large objects and surrounding people from accidental contact with the fan blades 9.

To replace the air filter 11, the fan 9 is turned off on the control unit, the upper part of the housing 8 is disconnected from the lower 7, the old air filter 11 is removed, a new air filter 11 is mounted instead of it, and the operations for assembling the air purifier 1 are carried out in reverse order.

Thus, reducing the impact of harmful factors and improving working conditions at the workplace of the nail service master is ensured due to the fact that the air purifier 1, containing an air filter 11, mounted in a housing containing openings for air supply and discharge, is movably mounted on a hinged multi-link holder with clamp 5, providing 5 degrees of freedom of the air purifier 1 relative to the working area, the small overall dimensions of the air purifier 1 provide its convenient use in a limited area of the workplace, and the presence of the backlight line 12 provides the required level of illumination at the workplace and eliminates the need for additional lighting devices.

Experimental tests of the claimed technical solution confirmed the convenience of its use in organizing the workplace of the nail service master, which does not interfere with the work of the master, a significant reduction in fine dust and volatile substances in the working area and sufficient lighting for work.

## Claims

1. An apparatus for cleaning air in in working zone of nail service master comprising: a body; fan; airfilter; backlight line; light diffuser; ; multi-link hinge holder; clamp; the body is made collapsible from the lower and upper parts; holes are made below and above the body, closed with protective net; a fan is mounted in the lower part of the case behind a protective net; above the fan, an air filter located in the upper part of the case;
in the lower part of the body, in a recess along the perimeter of the hole, an backlight line is mounted, which is covered with a light diffuser;
the body is pivotally connected to a multi-link hinge holder, the links of which are movably interconnected; the holder is movably mounted on a clamp.

2. The apparatus of claim 1, **characterized in that** the fan and the backlight are connected to the control unit.

3. The apparatus of claim 1, **characterized in that** the fan is made axial.

4. The apparatus of claim 1, **characterized in that** the air filter is cylindrical in shape.

5. The apparatus of claim 1 , **characterized in that** the air filter is filled with activated carbon, or cellulose, or cellulose paper, or paper, or non-woven material.

6. The apparatus of claim 1, **characterized in that** the links of the holder are made of paired parallel profile guides.
